# EUROPÄISCHE PATENTSCHRIFT

(11) **EP 2 637 866 B1**
(45) Veröffentlichungstag und Bekanntmachung des Hinweises auf die Patenterteilung: **07.01.2015**
(21) Anmeldenummer: 11782599.2
(22) Anmeldetag: 09.11.2011
(51) Int. Cl.: B29C 43/20, B32B 27/08, B32B 37/12, B32B 38/18, B60R 13/08, B32B 27/12, B32B 37/04, B32B 27/34, B32B 27/36, B32B 27/40

(54) **MEHRSCHICHT-KUNSTSTOFF-FOLIE SOWIE FOLIENBESCHICHTETES FORMGEPRESSTES BAUTEIL**
MULTI-LAYER PLASTIC FILM AND FILM-COATED COMPRESSION-MOULDED COMPONENT
FILM EN MATIÈRE PLASTIQUE MULTICOUCHE ET PIÈCE MOULÉE PAR COMPRESSION REVÊTUE DUDIT FILM

(30) Priorität: 09.11.2010 DE 102010060442
(43) Veröffentlichungstag der Anmeldung: 18.09.2013
(73) Patentinhaber: Carcoustics TechConsult GmbH, 51381 Leverkusen (DE)
(72) Erfinder: CZERNY, Hans, Rudolf, 53914 Swisttal (DE); HISSERICH, Michael, 42499 Hückeswagen (DE); SVIRIDENKO, Andreas, 41540 Dormagen (DE)
(74) Vertreter: Lohmanns, Bernard
(86) Internationale Anmeldenummer: PCT/EP2011/069776
(87) Internationale Veröffentlichungsnummer: WO 2012/062820

(56) Entgegenhaltungen:
- DE-A1- 2 935 631
- DE-A1- 10 104 829
- US-A- 4 008 347
- DATABASE WPI Week 200469 Thomson Scientific, London, GB; AN 2004-704067 XP002671882, & JP 2004 276301 A (SUMITOMO CHEM CO LTD) 7. Oktober 2004 (2004-10-07)

## Beschreibung

Die vorliegende Erfindung betrifft eine Mehrschicht-Kunststoff-Folie. Weiterhin ist Gegenstand der Erfindung ein folienbeschichtetes formgepresstes Bauteil, ein Verfahren zur Herstellung eines solchen Bauteils und die Verwendung eines solchen Bauteils zur Wärme- und/oder Schalldämmung in Kraftfahrzeugen. Im Rahmen der vorliegenden Erfindung soll unter Formpressen ein Verfahren zur Materialbearbeitung verstanden werden, mittels welchem einem in der Regel flächenhaft ausgedehnten ebenen Werkstück unter Einwirkung von Wärme und Druck eine dauerhafte 3d-Formgebung verliehen wird. Dabei ist neben der Formgebung der zum Pressen verwendeten Kavität, der Prozesstemperatur und dem aufgebrachten Druck insbesondere auch die Verweildauer des Werkstücks in der Kavität der Presse ein besonders relevanter Prozessparameter. Zum Formpressen besonders geeignete Werkstoffe sind z.B. Vliesstoffe oder geschäumte Duroplastische Kunststoffe, die mit einem wärmeaushärtenden Harz oder Binder getränkt sind.

Mehrschicht-Kunststoff-Folien sind aus dem Stand der Technik in einer großen Vielzahl bekannt. Neben der Verwendung der Mehrschicht-Kunststoff-Folien in der Verpackungsindustrie, wie z.B. aus DATABASE WPI Week 200469 Thomson Scientific bekannt, werden sie speziell für das Behäuten von z.B. thermisch und/oder akustisch wirksamen Isolierschichten bzw. -bauteilen verwendet. Die Kunststoff-Folien schützen die Isolierschichten vor Beschädigungen, die z.B. durch äußere Einflüsse wie Temperatur und Feuchtigkeit hervorgerufen werden können. So ist z.B. die Verwendung einer Duplofolie aus einer elastifizierten Polyester- und einer Esterurethanfolie zum Behäuten akustisch wirksamer formgepresster Bauteile aus harzgetränktem Bauwollfaservlies bekannt, wobei die Folie durch Koextrusion herstellt wird. Nachteilig an dieser Folie ist jedoch deren niedrige Temperaturbeständigkeit. Wird diese Folie zum Behäuten während eines Formpressvorgangs verwendet, so kann der Formpressvorgang nur in einem verhältnismäßig niedrigen Temperaturbereich stattfinden. Hierdurch ist die Herstellung zeitaufwendig. Des Weiteren ist die verwendete Duplofolie stark Hydrolyseanfällig.

Die Druckschrift US 4008347 A offenbart ein Mehrschicht-Kunststoff-Folien System aus geschäumten Plastik und Polyolefinfolie mit einer Zwischenschicht aus Polymeren, die als wärmeempfindlicher Kleber dient.

Weiterhin sind aus der DE 2935631 A1 Mehrschicht-Kunststoff-Folien zum Behäuten von Isolierschichten bekannt, die auf einer Seite eine Folie mit einem verhältnismäßig hohem Erweichungspunkt und auf der anderen Seite eine Folie mit einem verhältnismäßig niedrigem Erweichungspunkt aufweisen. Die Folien werden unter Einwirkung von Wärme und Druck koextrudiert. Diese MehrschichtKunststoff-Folien werden u.a. zum Behäuten von formgepressten Schaumkunststoffen oder harzverstärkten Faservliesen verwendet. Beim Formpressen sind diese Mehrschicht-Kunststoff-Folien starken Scherkräften unterworfen und neigen dabei zur Delamination. Der Schutz der behäuteten Schaumkunststoffe bzw. Faservliese vor äußeren Einflüssen kann hierdurch nicht mehr gewährleistet werden. Da Delamination von außen nicht sichtbar ist, besteht die Gefahr, dass die hergestellten Bauteile z.B. in Kraftfahrzeugen verbaut werden, obwohl sie fehlerhaft sind. Ein Bauteilversagen tritt dann während der Nutzung des Kfz auf, wodurch hohe Kosten, z.B. durch Austausch entstehen.

Die Aufgabe der vorliegenden Erfindung besteht daher darin, eine Mehrschicht-Kunststoff-Folie zum Behäuten formgepresster Bauteile anzugeben, welche eine verbesserte Temperaturbeständigkeit und eine erhöhte Prägbarkeit aufweist. Des Weiteren ist es Aufgabe der vorliegenden Erfindung, ein folienbeschichtetes formgepresstes Bauteil mit verbesserter Beständigkeit und ein geeignetes Herstellungsverfahren anzugeben.

Gelöst wird diese Aufgabe durch eine Mehrschicht-Kunststoff-Folie mit den Merkmalen des Anspruchs 1, einem folienbeschichteten formgepressten Bauteil mit den Merkmalen des Anspruchs 9 und einem Verfahren zur Herstellung eines folienbeschichteten formgepressten Bauteils mit den Merkmalen des Anspruchs 14. Vorteilhafte Ausgestaltungen sind jeweils Gegenstand der abhängigen Ansprüche. Es ist darauf hinzuweisen, dass die in den Patentansprüchen einzeln aufgeführten Merkmale auch über die verschiedenen Kategorien der Ansprüche hinweg in beliebiger, technologisch sinnvoller Weise miteinander kombiniert werden können und weitere Ausgestaltungen der Erfindung aufzeigen.

Eine erfindungsgemäße Mehrschicht-Kunststoff-Folie zur Beschichtung von durch Formpressen hergestellten Bauteilen weist mindestens eine erste Schicht aus einem ersten Kunststoffmaterial und eine zweite Schicht aus einem zweiten Kunststoffmaterial auf. Das erste Kunststoffmaterial der vorliegenden Erfindung weist dabei eine höhere Temperaturbeständigkeit als das zweite Kunststoffmaterial, das ein Thermoplast ist, auf. Weiterhin ist eine Adhäsionsschicht zwischen der ersten und der zweiten Schicht angeordnet, die die erste mit der zweiten Schicht mechanisch verbindet.

Die erfindungsgemäße Mehrschicht-Kunststoff-Folie hat den Vorteil, dass die vorhandene Adhäsionsschicht die Scherkräfte während eines Formpressvorgangs aufnehmen kann, so dass scherinduzierte Beschädigungen der Folie, wie sie bei der Verwendung der aus der DE 2935631 A1 bekannten Koextrudierten Folien zum Behäuten formgepresster Bauteile oftmals beobachtet werden, praktisch vollständig vermieden werden können.

Das folienbeschichtete, formgepresste Bauteil gemäß der vorliegenden Erfindung weist eine in der Regel flächenhaft ausgedehnte Isolierschicht auf, die zumindest einseitig mit einer erfindungsgemäßen Mehrschicht-Kunststoff-Folie beschichtet ist. Die zweite Schicht der Mehrschicht-Kunststoff-Folie zeigt dabei zur Isolierschicht hin. Die Mehrschicht-Kunststoff-Folie und die Isolierschicht sind durch ein temporäres Aufschmelzen der thermoplastischen zweiten Schicht mechanisch fest miteinander verbunden.

Ferner ist Gegenstand der Erfindung ein Verfahren zur Herstellung eines folienbeschichteten, formgepressten Bauteils. In einem ersten Schritt wird hierbei eine erfindungsgemäße Mehrschicht-Kunststoff-Folie bereitgestellt. Im nachfolgenden Schritt wird eine in der Regel flächenhaft ausgedehnte, formpressbare und thermisch und/oder akustisch wirksame Isolierschicht bereitgestellt. Danach wird die Isolierschicht zumindest einseitig mit der Mehrschicht-Kunststoff-Folie abgedeckt. Anschließend wird die folienbedeckte Isolierschicht formgepresst. Während des Formpressvorgangs erlangt die folienbedeckte Isolierschicht zum einen die vom Press-Werkzeug vorgegebene Form. Zum anderen verbinden sich die Mehrschicht-Kunststoff-Folie bzw. Mehrschicht-Kunststoff-Folien und die Isolierschicht durch das Aufschmelzen der zweiten Schicht der Mehrschicht-Kunststoff-Folie. Die Mehrschicht-KunststoffFolie und die Isolierschicht sind nun nicht mehr zerstörungsfrei voneinander lösbar.

Weiterhin ist Gegenstand der Erfindung die Verwendung eines erfindungsgemäßen folienbeschichteten formgepressten Bauteils zur Wärme-und/oder Schalldämmung in Kraftfahrzeugen. Als besonders vorteilhaft hat sich einer Verwendung in Form von Motorhaubenverkleidungen, Stirnwänden zwischen Motorräumen und Fahrgastzellen, Isolierungen von Auspuffsystemen oder Abgasanlagen sowie Verkleidungen von Ölwannen oder Getriebetunneln erwiesen.

In einer vorteilhaften Ausgestaltung ist der Elastizitätsmodul der Adhäsionsschicht kleiner als der Elastizitätsmodul der ersten und/oder der zweiten Schicht. Durch die hier verwendete Adhäsionsschicht wird es ermöglicht, dass Spannungen zwischen der ersten und der zweiten Schicht, besonders die Spannungen, die während des Formpressens entstehen, von der Adhäsionsschicht ausgeglichen werden können, wodurch die Prägbarkeit der erfindungsgemäßen Mehrschicht-Kunststoff-Folien verbessert wird.

Um eine möglichst gute Adhäsion zwischen der ersten und der zweiten Schicht der Mehrschicht-Kunststoff-Folie zu erhalten, sollte die Adhäsionsschicht vorteilhafterweise eine Dicke zwischen ca. 1 um und 15 um, bevorzugt zwischen etwa 4 um bis 7 um aufweisen.

In einem Ausführungsbeispiel der vorliegenden Erfindung wird die Adhäsionsschicht vermittels einer Primerschicht ausgebildet. Unter einer Primerschicht soll eine haftvermittelnde Schicht verstanden werden, die bevorzugt bei der Herstellung der erfindungsgemäßen Mehrschicht-Kunststoff-Folie auf eine Schicht der Folie aufgebracht wird, und die eine sehr gute Haftung dieser Schicht an der anderen Schicht vermittelt. Nach einer vorteilhaften Ausgestaltung der Folie kann die Primerschicht flexibel sein und aus einem vernetzenden Polymer, besonders bevorzugt aus einem Polyurethan-basierten vernetzenden Polymer bestehen.

Die Mehrschicht-Kunststoff-Folie kann in einem kontinuierlichen Verfahren hergestellt werden. Hierfür werden die erste und die zweite Schicht in getrennten Extrusionsverfahren insbesondere zeitgleich hergestellt. Die fertig extrudierten Schichten werden mit Hilfe von Führungen parallel und voneinander beabstandet geführt. Um die einzelnen Schichten miteinander zu verbinden, wird ein Klebstoff bzw. ein Primer zur Ausbildung der Adhäsionsschicht auf die Innenseite zumindest einer Schicht aufgetragen. Die Auftragung des Klebstoffs bzw. Primers kann durch Sprühauftrag bzw. auch per Hand erfolgen. Besonders bevorzugt wird der Klebstoff bzw. Primer auf eine Schicht aufgerakelt.

Nachdem der Klebstoff bzw. Primer aufgetragen wurde, werden die einzelnen Schichten miteinander mechanisch in Kontakt gebracht. Es entsteht ein fester Verbund, dessen Adhäsion durch Abwalzen noch verbessert werden kann.

Eine Haftung der Schichten kann darüber hinaus noch weiter verbessert werden, indem eine der beiden Schichten der Folie vor dem Aufbringen des Klebstoffs bzw. Primers bzw. dem Inkontaktbringen mit der Klebstoff- bzw. Primerbeschichteten weiteren Schicht einer Coronabehandlung unterzogen wird. Eine solche Vorbehandlung hat sich insbesondere bei einer Schicht aus Polyurethan-Ether als besonders wirksam erwiesen.

Die fertige Mehrschicht-Kunststoff-Folie kann entweder aufgerollt oder aber auch mit Hilfe von Schneidvorrichtungen in Abschnitte vorbestimmter Größen geschnitten werden. Grundsätzlich besteht auch die Möglichkeit die einzelnen Schichten der Mehrschicht-Kunststoff-Folie unabhängig voneinander herzustellen und getrennt voneinander zu lagern. Die Schichten können dann zu einem späteren Zeitpunkt unter Verwendung eines geeigneten Klebstoffs oder Primers miteinander verbunden werden.

Die eine niedrigere Temperaturbeständigkeit aufweisende thermoplastische zweite Schicht der erfindungsgemäßen Mehrschicht-Kunststoff-Folie ist vorzugsweise aus Polyurethan-Ether gebildet. Polyurethan-Ether weist sehr hohe Hydrolysebeständigkeit auf. Die Auswahl des thermoplastischen Kunststoffes kann jedoch auch danach erfolgen, wie und aus welchen Materialien die Isolierschichten aufgebaut sind, die mit den Mehrschicht-Kunststoff-Folien gemäß der Erfindung behäutet werden sollen. Die Auswahl ist so zu treffen, dass eine gute mechanische und chemische Verträglichkeit zwischen MehrschichtKunststoff-Folie, hier insbesondere der zweiten Schicht, und zu behäutender Isolierschicht besteht. Je nach verwendeter Isolierschicht kann eine optimale mechanische Verbindung zwischen der Mehrschicht-Kunststoff-Folie und der Isolierschicht alternativ auch dadurch erreicht werden, dass die zweite Schicht Co-Polyamid, Co-Polyester oder Co-Polyterephtalat umfasst.

In einer vorteilhaften Ausführung umfasst die erste Schicht Polyamid 6.6 bzw. besteht aus diesem Werkstoff. Polyamid 6.6 weist eine hohe mechanische Festigkeit, eine sehr gute chemische Beständigkeit und eine hohe Schmelztemperatur auf. Es eignet sich daher sehr gut zur Behäutung von Bauteilen, die in Bereichen eingesetzt werden, in denen u.a. hohe Temperaturen herrschen und wasser- oder ölhaltige und/oder aggressive Medien vorkommen, beispielsweise in Motorräumen.

Denkbar ist aber auch, dass die erste Schicht aus einem modifizierten Polyester oder einem Homopolyamid besteht.

In einer Ausführungsvariante weisen sowohl die erste als auch die zweite Schicht der Mehrschicht-Kunststoff-Folie eine Dicke von mindestens etwa 10 um und höchstens etwa 35 um auf. In einer bevorzugten Ausführung liegt die Dicke der ersten und zweiten Schicht bei mindestens etwa 15 um und höchstens etwa 25 um. Durch das Verwenden von ersten und zweiten Schichten mit unterschiedlichen Dicken können die akustischen Eigenschaften der MehrschichtKunststoff-Folie bzw. des folienbeschichteten formgepressten Bauteils individuell an den speziellen Verwendungszweck angepasst werden.

In einer weiteren vorteilhaften Ausführung kann eine flächenhaft ausgedehnte Isolierschicht beidseitig von einer erfindungsgemäßen Mehrschicht-KunststoffFolie abgedeckt sein. Vorstellbar ist aber auch, dass es sich nicht um ein flächenhaft ausgedehntes, sondern um ein räumlich ausgedehntes, folienbeschichtetes, formgepresstes Bauteil handelt. Um die Isolierschicht in diesem Fall vor äußeren Einflüssen zu schützen, muss die Isolierschicht allseitig mit der Mehrschicht-Kunststoff-Folie abgedeckt werden. Hierdurch wird eine vollständige Verkapslung der Isolierschicht erreicht. Das Bauteil ist nun besonders resistent gegenüber äußeren Einflüssen wie der Einwirkung hoher Temperaturen und aggressiver Substanzen und besitzt daher eine längere Lebensdauer. Diese (2d- oder 3d-) Bauteile mit vollständig verkapselter Isolierschicht eignen sich wegen ihrer sehr hohen Hydrolysebeständigkeit besonders gut für den Einsatz in Gebieten mit einer hohen Luftfeuchtigkeit, wie z. B. den Tropen.

Denkbar ist, dass die Isolierschicht des folienbeschichteten, formgepressten Bauteils aus einem Schaumkunststoff, z. B. aus Polyurethanschaum besteht. Ferner kann die Isolierschicht auch aus einem Melaminharzschaum, wie z. B. aus Basotect® der Firma BASF bestehen.

In einer anderen vorteilhaften Ausgestaltung der Erfindung kann die Isolierschicht auch Textilvliese oder Textilgewebe umfassen. Eine besonders bevorzugte Verwendung finden hierbei Baumwollfaservliese. Durch Verwendung von Baumwollfaservlies können insbesondere die Schalldämmeigenschaften verbessert werden. Bei den verwendeten Baumwollfaservliesen kann es sich z.B. um gerissene Stoffreste handeln.

Der Aufbau der Isolierschicht ist aber nicht auf die vorstehend genannten Ausführungen beschränkt. Es können praktisch alle formpressbaren Materialien mit vorteilhaften thermischen und/oder akustischen Eigenschaften zur Ausbildung der Isolierschicht verwendet werden.

In einer bevorzugten Ausführungsform der Erfindung umfasst die Isolierschicht ein wärmeaushärtendes Harz oder einen wärmeaushärtenden Binder, isbesondere ist die Isolierschicht mit einem solchen Harz oder Binder getränkt. Als besonders geeignet haben sich z.B. Phenolharze erwiesen. Phenolharze härten bei Temperaturen von ca. 150°C bis 170°C aus und sind nach dem Aushärten bruchfest und als duroplastischer Werkstoff widerstandsfähig gegenüber hohen Temperaturen. Ähnlich vorteilhafte Eigenschaften haben Melaminharze. Beide Harze werden bevorzugt in pulvriger Form in die Isolierschicht eingebracht. Beim Formpressen vernetzen die Harze und entwickeln duroplastische Eigenschaften, mit denen z.B. eine hohe Temperaturbeständigkeit einhergeht.

Die Temperatur während des Formpressens muss mindestens so hoch gewählt werden, dass zum einen der Erweichungspunkt der zweiten Schicht der Mehrschicht-Kunststoff-Folie erreicht wird. Hierdurch kann die thermoplastische zweite Schicht als Schmelzkleber wirken und es entsteht eine mechanisch hoch belastbare stoffschlüssige Verbindung zwischen der Mehrschicht-Kunststoff-Folie und der Isolierschicht. Zum anderen muss die Temperatur während des Formpressens so hoch gewählt werden, dass bei Vorhandensein eines Harzes oder eines Binders in der Isolierschicht die Aushärtungsreaktion des Harzes oder Binders stattfinden kann.

In einer bevorzugten Ausführung der Erfindung erfolgt der Formpressvorgang des folienbeschichteten Bauteils bei einer Temperatur von über 180°C, bevorzugt über 200°C, besonders bevorzugt über 220°C. Dies ermöglicht eine relevante Verkürzung des Formpresszyklus und damit eine Verringerung der Durchlaufzeit. Damit einhergehend werden die Herstellkosten der Bauteile deutlich reduziert.

Die Dauer des Pressvorgangs dauert in einer Ausgestaltung der vorliegenden Erfindung weniger als 100 Sekunden, vorzugsweise weniger als 90 Sekunden, besonders bevorzugt weniger als 70 Sekunden.

In einer vorteilhaften Ausführung wird das folienbeschichte formgepresste Bauteil als akustisch wirksame Motorhaubenverkleidung oder als akustisch wirksame Trennwand zwischen Fahrgastzelle und Motorraum verwendet. Die folienbeschichten formgepressten Bauteile gemäß der vorliegenden Erfindung eignen sich zudem gut als Stirnwände sowie als Verkleidungen von Getriebetunnel und Ölwannen. Vorstellbar ist aber auch, dass das Bauteil zur thermischen und/oder akustischen Isolierung von Gebäuden oder Rohrleitungen eingesetzt wird.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen. Die Erfindung ist jedoch nicht auf die gezeigte Ausführungsvariante beschränkt. Insbesondere umfasst die Erfindung soweit technisch sinnvoll beliebige Kombinationen der technischen Merkmale, die den Unteransprüchen aufgeführt oder in der Beschreibung als erfindungsrelevant beschrieben sind.

Es zeigen:
- Fig. 1:: eine schematische Schnittdarstellung einer erfindungsgemäßen Mehrschicht-Kunststoff-Folie in einem Ausführungsbeispiel;
- Fig. 2:: eine schematische Schnittdarstellung eines erfindungsgemäßen flächenhaft ausgedehnten, folienbeschichteten formgepressten Bauteils in einer Ausführungsform.

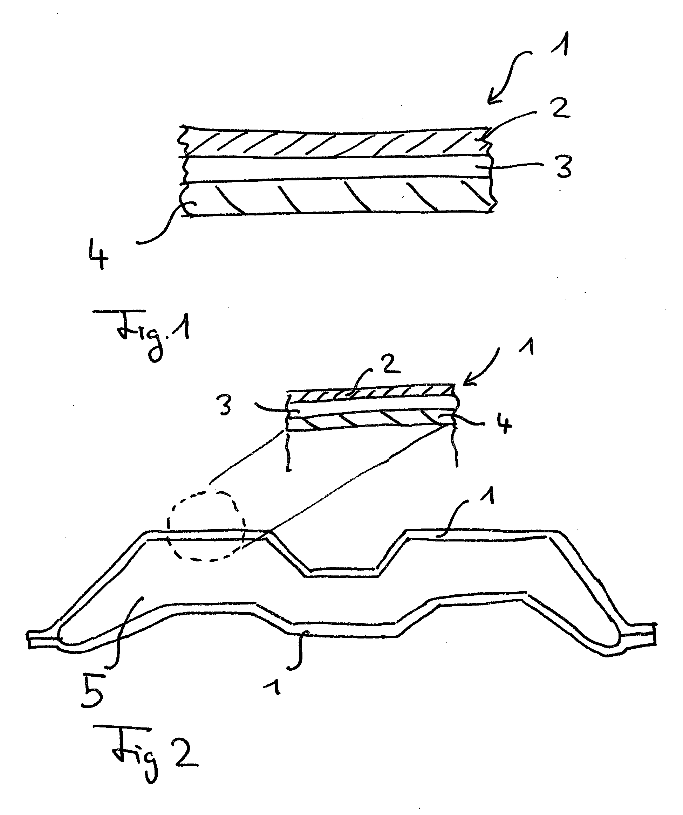

Die in Fig. 1 dargestellte Mehrschicht-Kunststoff-Folie 1 besteht aus einer ersten Schicht 2, einer thermoplastischen zweiten Schicht 4 und einer Adhäsionsschicht 3, die zwischen der ersten Schicht 2 und der zweiten Schicht 4 angeordnet ist. Die Adhäsionsschicht 3 wird von einer flexiblen Primerschicht mit einer Dicke von wenigen um gebildet, bevorzugt hat sie eine Dicke von etwa 4 um bis 7 um. Als Primer wird ein vernetzendes Polymer verwendet, welches eine erhöhte Haftung sowohl auf der ersten Schicht 2 als auch auf der zweiten Schicht 4. aufweist.

Die zweite Schicht 4 besteht vorteilhaft aus einem thermoplastischen Polyurethan, das bei erhöhter Temperatur erweicht. Hierdurch weist die zweite Schicht 4 bei erhöhten Temperaturen Klebeeigenschaften auf und eignet sich daher sehr gut als Heißschmelzkleber. Als besonders geeignetes Material für die zweite Schicht hat sich Polyurethanäther erwiesen.

Die erste Schicht 2 besteht beispielsweise aus Polyamid 6.6.

Die erste Schicht 2 und die zweite Schicht 4 weisen jeweils eine Dicke von etwa 15 um bis 35 um auf. Die erste Schicht 2 und zweite Schicht 4 können sich jedoch auch in ihrer Dicke voneinander unterscheiden.

Zur Herstellung des Folienverbunds werden Folien aus Polyamid zur Ausbildung der ersten Schicht 2 und aus Polyurethan zur Ausbildung der zweiten Schicht 4 separat extrudiert. Danach wird eine Primerschicht definierter Dicke einseitig auf die Polyurethanfolie oder auf die Polyamidfolie aufgebracht, bevorzugt aufgerakelt. Ggf. kann die Haftung der Primerschicht auf der Polyurethanfolie durch eine vorgelagerte Coronabehandlung der Oberfläche der Polyurethanfolie noch verbessert werden. Nach dem Aufbringen der Primerschicht werden die Polyamidfolie und die Polyurethanfolie unter Einschluss der Primerschicht zusammengeführt und in mechanischen Konakt gebracht, wodurch sich eine flächige Verklebung der Polyamidfolie mit der Polyurethanfolie ergibt. Die Festigkeit dieses Folienverbunds kann durch lokale Krafteinwirkung auf den Folienverbund erhöht werden, z.B. indem der Verbund durch ein oder mehrerer Walzenpaare hindurchgeführt wird. Danach wird der Folienverbund auf einer Spule aufgespult und in aufgespulter Form für eine spätere Verwendung bereitgehalten.

In Fig. 2 ist schematisch ein Schnitt durch ein flächenhaft ausgedehntes, folienbeschichtetes, formgepresstes Bauteil 6 dargestellt, bei dem es sich z.B. um eine Motorhaubenisolation handeln kann. Das Bauteil 6 umfasst eine Isolierschicht 5, die beidseitig von einer Mehrschicht-Kunststoff-Folie 1', 1" kaschiert ist. Jede der Mehrschicht-Kunststoff-Folien 1', 1" ist stoffschlüssig mit der Isolierschicht 5 verbunden. Weiterhin sind die Mehrschicht-Kunststoff-Folien 1', 1" umlaufend randseitig stoffschlüssig unmittelbar miteinander verbunden. Auf diese Weise ist die Isolierschicht 5 vollständig von den MehrschichtKunststoff-Folien 1', 1" umschlossen, so dass die Isolierschicht 5 vollständig verkapselt und damit effektiv vor Umwelteinschlüssen geschützt ist.

Beide Mehrschicht-Kunststoff-Folien 1', 1" bestehen aus einer ersten Schicht 2', 2", einer zweiten Schicht 4', 4" und einer dazwischen liegenden Adhäsionsschicht 3, ihr Aufbau entspricht damit dem Aufbau der in Fig. 1 dargestellten Mehrschicht-Kunststoff-Folie 1.

Die Isolierschicht 5 besteht aus einem Baumwollfaservlies, welches mit einem nicht ausgehärteten Phenolharz getränkt ist. Baumwollfaservliese sind im Bereich der Kraftfahrzeugtechnik besonders geeignet, da sie bei niedrigen Materialkosten gute Schalldämmeigenschaften aufweisen.

Das Bauteil aus Fig. 2 wird durch Formpressen in einem beheizten Formwerkzeug hergestellt. Hierfür werden ein vorgeschnittener Abschnitt der vorkonfektionierten Mehrschicht-Kunststoff-Folie 1", ein vorgeschnittener Abschnitt der Isolierschicht 5 und ein vorgeschnittener Abschnitt der Mehrschicht-Kunststoff-Folie 1' horizontal übereinander gelegt, so dass die ersten Schichten 2^{N}, 2" der Mehrschicht-Kunststoff-Folien 1', 1" nach außen orientiert sind. Dabei sind die Abschnitte der Mehrschicht-Kunststoff-Folien 1', 1" geringfügig größer dimensioniert als der Abschnitt der Isolierschicht 5, so dass die Mehrschicht-Kunststoff-Folien 1', 1" die Isolierschicht 5 allseitig randseitig übergreifen. Der entstehende lose Verbund wird an zwei gegenüberliegenden Längsseiten mittels eines geeigneten Werkzeugs gegriffen, dadurch mechanisch fixiert und in das beheizte auf einer Presse befestigte geöffnete Formwerkzeug gelegt, worauf das Formwerkzeug geschlossen wird.

Das entstehende Bauteil erlangt durch den Druck der Presse auf das Formwerkzeug die vom Werkzeug vorgegebene Form. Die Hälften des Formwerkzeugs sind auf bis zu 240°C aufgeheizt, so dass während des Formpressens das Phenolharz in der Isolierschicht aushärtet. Da das für die erste Schichten 2^{N}, 2" der Mehrschicht-Kunststoff-Folien 1', 1" verwendete PA 6.6 eine sehr hohe Temperaturbeständigkeit aufweist, kann mit hohen Temperaturen des Formwerkzeugs gearbeitet werden, woraus eine kurze Aushärtungszeit der mit Phenolharz getränkten Isolierschicht resultiert. Hieraus kann die Zykluszeit verkürzt werden, was mit einer deutlichen Effizienzsteigerung des Herstellungsverfahrens einhergeht.

Weiterhin schmelzen die an die Isolierschicht 5 angrenzenden zweiten Schichten 4', 4" auf und wirken damit als Schmelzkleber. Es entsteht ein unlösbarer Verbund zwischen der Isolierschicht 5 und den Mehrschicht-Kunststoff-Folien 1', 1".

Der randseitig über die Isolierschicht 5 hinaus gehende Teil der Mehrschicht-Kunststoff-Folien 1', 1" wird während des Formpressens unmittelbar miteinander verschweißt und dichtet so die Isolierschicht 5 vollständig nach außen hin ab.

## Patentansprüche

1. Mehrschicht-Kunststoff-Folie (1, 1', 1") zur Beschichtung von durch Formpressen hergestellten Bauteilen, mit den folgenden Merkmalen:
a. die Folie umfasst mindestens eine erste Schicht (2, 2', 2") aus einem ersten Kunststoffmaterial und eine zweite Schicht (4, 4', 4") aus einem zweiten Kunststoffmaterial,
b. das erste Kunststoffmaterial weist eine höhere Temperaturbeständigkeit auf als das zweite Kunststoffmaterial,
c. das zweite Kunststoffmaterial ist thermoplastisch, **dadurch gekennzeichnet, dass**
d. zwischen der ersten Schicht (2, 2', 2") und der zweiten Schicht (4, 4', 4") eine haftvermittelnde Adhäsionsschicht (3) in Form einer fle-xiblen Primerschicht aus einem vernetzenden Polymer angeordnet ist, welche die erste Schicht (2, 2', 2") mit der zweiten Schicht (4, 4', 4") durch Haftung verbindet.

2. Folie (1, 1', 1") nach Anspruch 1, **dadurch gekennzeichnet, dass** der Elastizitätsmodul der Adhäsionsschicht (3) kleiner ist als der Elastizitätsmodul der ersten Schicht (2, 2', 2") und/oder der zweiten Schicht (4, 4', 4").

3. Folie (1, 1', 2") nach Anspruch 1, **dadurch gekennzeichnet, dass** die Adhäsionsschicht (3) eine Dicke zwischen 1 µm und 15 µm aufweist, bevorzugt zwischen 4 µm und 7 µm.

4. Folie (1, 1', 1") nach Anspruch 3, **dadurch gekennzeichnet, dass** die Primerschicht aus einem Polyurethan basierten vernetzenden Polymer besteht.

5. Folie (1, 1', 1") nach einem der vorangegangenen Ansprüche, **dadurch gekennzeichnet, dass** das erste Kunststoffmaterial Polyamid 6.6 umfasst.

6. Folie (1, 1', 1") nach einem der vorangegangen Ansprüche, **dadurch gekennzeichnet, dass** die erste Schicht (2, 2', 2") eine Dicke von mindestens etwa 10 µm und höchstens etwa 35 µm, vorzugsweise von 15 µm und höchstens etwa 25 µm, aufweist.

7. Folie (1, 1', 1") nach einem der vorangegangenen Ansprüche, **dadurch gekennzeichnet, dass** das zweite Kunststoffmaterial Polyurethan-Äther, CoPolyamid oder Co-Polyterephtalat umfasst.

8. Folie (1, 1', 1") nach einem der vorangegangenen Ansprüche, **dadurch gekennzeichnet, dass** die zweite Schicht (4, 4', 4") eine Dicke von mindestens etwa 10 µm und höchstens etwa 35 µm, vorzugsweise von mindestens 15 µm und höchstens etwa 25 µm, aufweist.

9. Folienbeschichtetes, durch Formpressen hergestelltes Bauteil (6), Insbesondere zur Wärme- und Schalldämmung, mit einer Isolierschicht (5), die zumindest einseitig mit einer Mehrschlcht-Kunststoff-Folie (1', 1") nach Anspruch 1 beschichtet ist, wobei die thermoplastische zweite Schicht (4', 4") der Mehrschicht-Kunststoff-Folie (1', 1") zur Isolierschicht (5) hinzeigt, und die Mehrschicht-Kunststoff-Folie (1', 1") und die Isolierschicht (5) durch Aufschmelzen der zweiten Schicht (4', 4") fest verbunden sind.

10. Fölienbeschichtetes formgepresstes Bauteil (6) nach Anspruch 9, **dadurch gekennzeichnet, dass** die Isolierschicht (5) allseitig mit der MehrschichtKunststoff-Folie (1', 1") beschichtet ist.

11. Folienbeschichtetes formgepresstes Bauteil (6) nach Anspruch 9, **dadurch gekennzeichnet, dass** die Isollerschicht (5) Baumwollfaservlies, Melaminharzschaum oder geschäumtes Polyurethan umfasst.

12. Folienbeschichtetes formgepresstes Bauteil (6) nach Anspruch 11, **dadurch gekennzeichnet, dass** die Isolierschicht (5) mit einem wärmeaushärtenden Harz oder Binder, bevorzugt Phenolharz, Melaminharz oder Epoxidharz, versetzt ist.

13. Folienbeschichtetes formgepresstes Bauteil (6) nach Anspruch 11, **dadurch gekennzeichnet, dass** es sich bei dem Bauteil um eine Motorhaubenverkleidung, eine Trennwand zwischen Motorraum und Fahrgastzelle, eine Verkleidung für eine Ölwanne oder eine Verkleidung eines Getriebetunnels für ein Kraftfahrzeug handelt.

14. Verfahren zur Herstellung eines folienbeschichteten formgepressten Bauteils (6), das folgende Schritte aufweist:
a. Bereitstellen einer Mehrschicht-Kunststoff-Folie (1, 1', 1") gemäß Anspruch 1,
b. Bereitstellen einer formpressbaren thermisch und/oder akustisch wirksamen Isolierschicht (5),
c. zumindest einseitiges Abdecken der Isolierschicht (5) mit der Mehrschicht-Kunststoff-Folle (1, 1', 1"),
d. Formpressen der follenbedeckten Isollerschlcht (5), wodurch die folienbedeckte Isolierschicht (5) in Form gebracht wird und wobei sich gleichzeitig die Mehrschlcht-Kunststoff-Folie (1, 1', 1") und die Isolierschicht (5) unter Wärmeeinwirkung durch Aufschmelzen der zweiten Schicht (4', 4") der Mehrschicht-Kunststoff-Folie (1, 1', 1") unlösbar miteinander verbinden.

15. Verfahren gemäß Anspruch 14, **dadurch gekennzeichnet, dass** die bereitgestellte Isolierschicht (5) zumindest partiell mit einem wärmehärtenden Harz oder Binder getränkt ist.

16. Verfahren nach Anspruch 14, **dadurch gekennzeichnet, dass** der Pressvorgang weniger als 100 Sekunden dauert, vorzugsweise weniger als 90 Sekunden, besonders bevorzugt weniger als 70 Sekunden.

17. Verfahren nach Anspruch 14, **dadurch gekennzeichnet, dass** die Oberflächentemperatur des zum Formpressen verwendeten Formwerkzeugs während des Formpressvorgangs über 200°C, bevorzugt über 220°C beträgt.

18. Verfahren nach Anspruch 14, **dadurch gekennzeichnet, dass** der Schließdruck während des Formpressens zwischen etwa 50-400 t, bevorzugt etwa 100 t beträgt.

19. Verwendung eines folienbeschichteten formgepressten Bauteils (6) nach einem oder mehreren der vorangegangenen Ansprüche zur Wärmeund/oder Schalldämmung In Kraftfahrzeugen, insbesondere in Form einer Motorhaubenverkleidung, einer Trennwand zwischen Motorraum und Fahrgastzelle, einer Verkleidung für eine Ölwanne oder einer Verkleidung eines Getriebetunnels.

20. Verwendung eines folienbeschichteten formgepressten Bauteils (6) nach einem oder mehreren der vorangegangenen Ansprüche in einer Atmosphäre mit hohem Gehalt von Wasser- und/oder Öldampf und/oder sonstigen aggressiven Substanzen.

## Claims

1. A multi-layer plastic film (1, 1', 1") for coating components manufactured by compression moulding, comprising the following features:
a. the film comprises at least a first layer (2, 2', 2") consisting of a first plastic material and a second layer (4, 4', 4") consisting of a second plastic material,
b. the first plastic material has a higher temperature resistance than the second plastic material,
c. the second plastic material is thermoplastic,
**characterised in that**
d. an adhesion-promoting adhesion layer (3) in the form of a flexible primer layer consisting of a cross-linking polymer, which bonds the first layer (2, 2', 2") to the second layer (4, 4', 4") by adhesion, is disposed between the first layer (2, 2', 2") and the second layer (4, 4', 4").

2. The film (1, 1', 1") according to claim 1, **characterised in that** the modulus of elasticity of the adhesion layer (3) is smaller than the modulus of elasticity of the first layer (2, 2', 2") and/or of the second layer (4, 4', 4").

3. The film (1, 1', 1") according to claim 1, **characterised in that** the adhesion layer (3) has a thickness of between 1 µm and 15 µm, preferably between 4 µm and 7 µm.

4. The film (1, 1', 1") according to claim 3, **characterised in that** the primer layer consists of a polyurethane-based cross-linking polymer.

5. The film (1, 1', 1") according to any one of the preceding claims, **characterised in that** the first plastic material comprises polyamide 6.6.

6. The film (1, 1', 1") according to any one of the preceding claims, **characterised in that** the first layer (2, 2', 2") has a thickness of at least about 10 µm and at most about 35 µm, preferably of 15 µm and at most about 25 µm.

7. The film (1, 1', 1") according to any one of the preceding claims, **characterised in that** the second plastic material comprises polyurethane ether, co-polyamide or co-polyterephthalate.

8. The film (1, 1', 1") according to any one of the preceding claims, **characterised in that** the second layer (4, 4', 4") has a thickness of at least about 10 µm and at most about 35 µm, preferably of at least 15 µm and at most about 25 µm.

9. A film-coated component (6) manufactured by compression moulding, in particular for thermal and sound insulation, comprising an insulating layer (5) which is coated on at least one side with a multi-layer plastic film (1', 1") according to claim 1, wherein the thermoplastic second layer (4', 4") of the multi-layer plastic film (1', 1") points towards the insulating layer (5) and the multi-layer plastic film(1', 1") and the insulating layer (5) are firmly bonded by melting on the second layer (4', 4").

10. The film-coated compression-moulded component (6) according to claim 9, **characterised in that** the insulating layer (5) is coated on all sides with the multi-layer plastic film (1', 1").

11. The film-coated compression-moulded component (6) according to claim 9, **characterised in that** the insulating layer (5) comprises non-woven cotton fabric, melamine resin foam or foamed polyurethane.

12. The film-coated compression-moulded component (6) according to claim 11, **characterised in that** a thermosetting resin or binder, preferably phenolic resin, melamine resin or epoxy resin, has been added to the insulating layer (5).

13. The film-coated compression-moulded component (6) according to claim 11, **characterised in that** the component is an engine hood lining, a dividing wall between the engine compartment and the passenger compartment, a lining for an oil pan or a lining of a transmission tunnel for a motor vehicle.

14. A method for producing a film-coated compression-moulded component (6) comprising the following steps:
a. providing a multi-layer plastic film (1, 1', 1") according to claim 1,
b. providing a compression-mouldable thermally and/or acoustically active insulating layer (5),
c. covering the insulating layer (5) at least on one side with the multi-layer plastic film (1, 1', 1"),
d. compression moulding of the film-covered insulating layer (5), whereby the film-covered insulating layer (5) is brought into shape, and wherein the multi-layer plastic film (1, 1', 1") and the insulating layer (5) bond in a non-detachable manner at the same time under the influence of heat by melting on the second layer (4', 4") of the multi-layer plastic film (1, 1', 1").

15. The method according to claim 14, **characterised in that** the provided insulating layer (5) is at least partially impregnated with a thermosetting resin or binder.

16. The method according to claim 14, **characterised in that** the compression process lasts less than 100 seconds, preferably less than 90 seconds, particularly preferably less than 70 seconds.

17. The method according to claim 14, **characterised in that** the surface temperature of the moulding tool used for compression moulding during the compression moulding process is more than 200°C, preferably more than 220°C.

18. The method according to claim 14, **characterised in that** the locking pressure during the compression moulding process is between about 50-400 t, preferably about 100 t.

19. A use of a film-coated compression-moulded component (6) according to one or more of the preceding claims for thermal and/or sound insulation in motor vehicles, in particular in the form of an engine hood lining, a dividing wall between the engine compartment and the passenger compartment, a lining for an oil pan or a lining of a transmission tunnel.

20. The use of a film-coated compression-moulded component (6) according to one or more of the preceding claims in an atmosphere with a high content of water vapour and/or oil vapour and/or other aggressive substances.

## Revendications

1. Film multicouche en matière plastique (1, 1', 1") de revêtement de composants fabriqués par moulage par compression, ayant les caractéristiques suivantes :
a. le film comprend au moins une première couche (2, 2', 2") en une première matière plastique et une deuxième couche (4, 4', 4") en une deuxième matière plastique,
b. la première matière plastique présente une résistance à chaud supérieure à celle de la deuxième matière plastique,
c. la deuxième matière plastique est thermoplastique,
**caractérisé par le fait qu'**
d. entre ladite première couche (2, 2', 2") et ladite deuxième couche (4, 4', 4") est disposée une couche d'adhérence (3) promotrice d'adhérence sous forme d'une couche de primaire flexible en un polymère réticulant qui relie par adhérence ladite première couche (2, 2', 2") à ladite deuxième couche (4, 4', 4").

2. Film (1, 1', 1") selon la revendication 1, **caractérisé par le fait que** le module d'élasticité de ladite couche d'adhérence (3) est inférieur au module d'élasticité de ladite première couche (2, 2', 2") et/ou de ladite deuxième couche (4, 4', 4").

3. Film (1, 1', 1") selon la revendication 1, **caractérisé par le fait que** ladite couche d'adhérence (3) présente une épaisseur comprise entre 1 µm et 15 µm, de préférence entre 4 µm et 7 µm.

4. Film (1, 1', 1") selon la revendication 3, **caractérisé par le fait que** ladite couche de primaire se compose d'un polymère réticulant sur la base de polyuréthane.

5. Film (1, 1', 1") selon l'une quelconque des revendications précédentes, **caractérisé par le fait que** la première matière plastique comprend du polyamide 6.6.

6. Film (1, 1', 1") selon l'une quelconque des revendications précédentes, **caractérisé par le fait que** la première couche (2, 2', 2") présente une épaisseur d'au moins 10 µm à peu près et d'au plus 35 µm à peu près, de préférence de 15 µm et d'au plus 25 µm à peu près.

7. Film (1, 1', 1") selon l'une quelconque des revendications précédentes, **caractérisé par le fait que** la deuxième matière plastique comprend de l'éther de polyuréthane, du co-polyamide ou du co-polytéréphthalate.

8. Film (1, 1', 1") selon l'une quelconque des revendications précédentes, **caractérisé par le fait que** ladite deuxième couche (4, 4', 4") présente une épaisseur d'au moins 10 µm à peu près et d'au plus 35 µm à peu près, de préférence d'au moins 15 µm et d'au plus 25 µm à peu près.

9. Composant (6) revêtu de film et fabriqué par moulage par compression, en particulier pour l'isolation thermique et acoustique, comprenant une couche isolante (5) qui est revêtue, au moins sur une face, d'un fil multicouche en matière plastique (1', 1") selon la revendication 1, ladite deuxième couche (4', 4") thermoplastique du film multicouche en matière plastique (1', 1") montre vers la couche isolante (5), et le film multicouche en matière plastique (1', 1") et ladite couche isolante (5) sont solidaires l'un de l'autre par fusion de ladite deuxième couche (4', 4").

10. Composant (6) revêtu de film et moulé par compression, selon la revendication 9, **caractérisé par le fait que** ladite couche isolante (5) est revêtue de tout côté dudit film multicouche en matière plastique (1', 1").

11. Composant (6) revêtu de film et moulé par compression, selon la revendication 9, **caractérisé par le fait que** ladite couche isolante (5) comprend du nontissé de fibres de coton, de la mousse de résine de mélamine ou de la mousse de polyuréthane.

12. Composant (6) revêtu de film et moulé par compression, selon la revendication 11, **caractérisé par le fait qu'**un(e) résine ou liant thermodurcissable, de préférence une résine phénolique, une résine de mélamine ou une résine époxyde, est incorporé(e) dans ladite couche isolante (5).

13. Composant (6) revêtu de film et moulé par compression, selon la revendication 11, **caractérisé par le fait que** ledit composant est un habillage de capot, une cloison entre le compartiment moteur et l'habitacle, un habillage pour une cuvette-carter ou un habillage d'un tunnel d'arbre de transmission pour un véhicule automobile.

14. Procédé de fabrication d'un composant (6) revêtu de film et moulé par compression, qui comprend les étapes suivantes :
a. fournir un film multicouche en matière plastique (1, 1', 1") selon la revendication 1,
b. fournir une couche isolante (5) qui est apte à être moulée par compression et est efficace thermiquement et/ou acoustiquement,
c. recouvrir, au moins sur une face, ladite couche isolante (5) d'un film multicouche en matière plastique (1, 1', 1"),
d. mouler par compression ladite couche isolante (5) recouverte de film, ce par quoi la couche isolante (5) recouverte de film est mise en forme, et, en même temps, ledit film multicouche en matière plastique (1, 1', 1") et ladite couche isolante (5) se liant entre eux d'une manière inséparable sous l'effet de la chaleur, par fusion de la deuxième couche (4', 4") du film multicouche en matière plastique (1, 1', 1").

15. Procédé selon la revendication 14, **caractérisé par le fait que** la couche isolante (5) fournie est imprégnée, au moins en partie, d'un(e) résine ou liant thermodurcissable.

16. Procédé selon la revendication 14, **caractérisé par le fait que** l'opération de pressage a une durée inférieure à 100 secondes, de préférence inférieure à 90 secondes, d'une manière particulièrement préférée inférieure à 70 secondes.

17. Procédé selon la revendication 14, **caractérisé par le fait que** la température de surface de l'outil de moulage utilisé pour le moulage par compression, durant l'opération de moulage par compression, est supérieure à 200 °C, de préférence supérieure à 220 °C.

18. Procédé selon la revendication 14, **caractérisé par le fait que** la force de compression durant le moulage par compression est comprise entre environ 50 et 400 t, de préférence de 100 t à peu près.

19. Mise en oeuvre d'un composant (6) revêtu de film et moulé par compression, selon l'une ou plusieurs des revendications précédentes, pour l'isolation thermique et/ou acoustique dans des véhicules automobiles, en particulier sous forme d'un habillage de capot, d'une cloison entre le compartiment moteur et l'habitacle, d'un habillage pour une cuvette-carter ou d'un habillage d'un tunnel d'arbre de transmission.

20. Mise en oeuvre d'un composant (6) revêtu de film et moulé par compression, selon l'une ou plusieurs des revendications précédentes, dans une atmosphère ayant une teneur élevée en vapeur d'eau et/ou d'huile et/ou d'autres substances agressives.
